Europäisches Patentamt

European Patent Office

Office européen des brevets

(11) Numéro de publication: **0 068 423**
**B1**

(12) **FASCICULE DE BREVET EUROPEEN**

(45) Date de publication du fascicule du brevet: **18.07.90**　(51) Int. Cl.⁵: **G 02 B 6/38**

(21) Numéro de dépôt: **82105490.5**

(22) Date de dépôt: **23.06.82**

(54) Connecteur optique monofibre.

(30) Priorité: **24.06.81 FR 8112371**

(43) Date de publication de la demande:
**05.01.83 Bulletin 83/01**

(45) Mention de la délivrance du brevet:
**18.07.90 Bulletin 90/29**

(84) Etats contractants désignés:
**CH DE FR GB IT LI NL SE**

(56) Documents cités:
**EP-A-0 016 575**
**DE-A-2 616 876**
**FR-A-2 275 787**
**GB-A-2 020 844**
**US-A-4 019 241**
**US-A-4 050 783**
**US-A-4 094 580**
**US-A-4 109 994**

(73) Titulaire: **COMPAGNIE LYONNAISE DE TRANSMISSIONS OPTIQUES Société anonyme dite:**
**170, Quai de Clichy**
**F-92111 Clichy (FR)**

(72) Inventeur: **Hakoun, Roland**
**15, rue François Bonvin**
**F-75015 Paris (FR)**

(74) Mandataire: **Weinmiller, Jürgen et al**
**Lennéstrasse 9 Postfach 24**
**D-8133 Feldafing (DE)**

Courier Press, Leamington Spa, England.

## Description

La présente invention concerne un connecteur optique monofibre permettant de réaliser une connexion entre deux fibres optiques, avec une grande précision d'alignement d'une portion terminale d'une fibre avec celle de l'autre fibre.

Ce connecteur optique monofibre utilise le principe de positionnement d'une fibre par trois tiges maintenues côte à côte et délimitant entre elles un canal central dans lequel est insérée la fibre, les trois tiges définissant, pour l'un et l'autre des deux demi-conducteurs, deux ensembles emboîtables l'un dans l'autre dans chacun desquels l'extrémité de la fibre est positionnée sensiblement à mi-longueur.

On connaît, par le document DE 26 16 876, un tel connecteur dans lequel les trois tiges présentent, sensiblement sur la moitié avant de chacun des deux demi-connecteurs, deux méplats usinés respectivement de part et d'autre de la zone de contact de chacune d'elles, chaque demi-connecteur comportant également au moins une bague rigide de positionnement entourant les trois tiges.

Dans ce connecteur, les tiges ne sont pas cylindriques à section droite circulaire, mais en forme de secteur. En outre le canal central de guidage est de section triangulaire et le guidage ainsi obtenu n'est pas très précis.

De plus, une bague de positionnement n'entoure que les trois tiges d'un demi-connecteur, mais pas les trois tiges de l'autre. Le centrage d'un demi-connecteur par rapport à l'autre n'est donc pas précis.

Dansa le but d'assurer un alignement parfait, le connecteur selon l'invention comporte, pour chaque demi-connecteur, trois tiges cylindriques à section droite circulaire et une bague de positionnement recouvrant les extrémités des trois tiges, mais aussi les extrémités des trois tiges de l'autre demi-connecteur.

La présente invention a pour objet un connecteur optique monofibre formé de deux demi-connecteurs recevant respectivement les portions terminales de deux fibres à connecter et comportant des moyens d'assemblage des deux demi-connecteurs, chaque demi-connecteur comportant trois tiges maintenues côte à côte de manière à délimiter entre elles un canal central dans lequel est insérée la portion terminale de la fibre, ces trois tiges définissant, pour l'un et l'autre des deux demi-connecteurs, deux ensembles emboîtables l'un dans l'autre dans chacun desquels l'extrémité de la fibre est positionnée sensiblement à mi-longueur, ces trois tiges présentant, sensiblement sur la moitié avant de chacun des deux demi-connecteurs, deux méplats usinés respectivement de part et d'autre de la zone de contact de chacune d'elles avec la fibre, chaque demi-connecteur comportant également au moins une bague rigide de positionnement entourant les trois tiges, caractérisé en ce que dans la partie non-usinée les trois tiges sont cylindriques à section droite circulaire, en ce que dans la moitié avant de chacun de deux demi-connecteurs les zones de contact des tiges avec la fibre sont des portions conservées de la surface cylindrique desdites trois tiges, et en ce que chaque bague rigide entoure également les trois tiges de l'autre demi-connecteur, ces deux bagues assurant, par pression radiale sur lesdits ensembles emboîtés, le positionnement final des portions terminales de l'une et l'autre des deux fibres.

De préférence, lesdits méplats sur chaque tige sont sensiblement symétriques par rapport au plan longitudinal médian de la tige, passant par sa zone de contact avec la fibre, et leur inclinaison par rapport à ce plan pour chaque tige se répète sensiblement d'une tige à l'autre dans l'un et l'autre des deux demi-connecteurs dont au moins les moitiés avant sont pratiquement identiques.

L'invention sera décrite ci-après plus en détail à l'aide d'un exemple de réalisation illustré dans le dessin ci-annexé. Dans ce dessin:

—La figure 1 est une coupe longitudinale du connecteur selon l'invention,

—la figure 2 est une vue en perspective illustrant la partie centrale de l'un des deux demi-connecteurs selon l'invention,

—la figure 2a schématise le mode d'assemblage des deux demi-connecteurs,

—les figures 3 et 4 sont deux coupes transversales du connecteur selon l'invention, effectuées respectivement selon les lignes III—III et IV—IV de la figure 1.

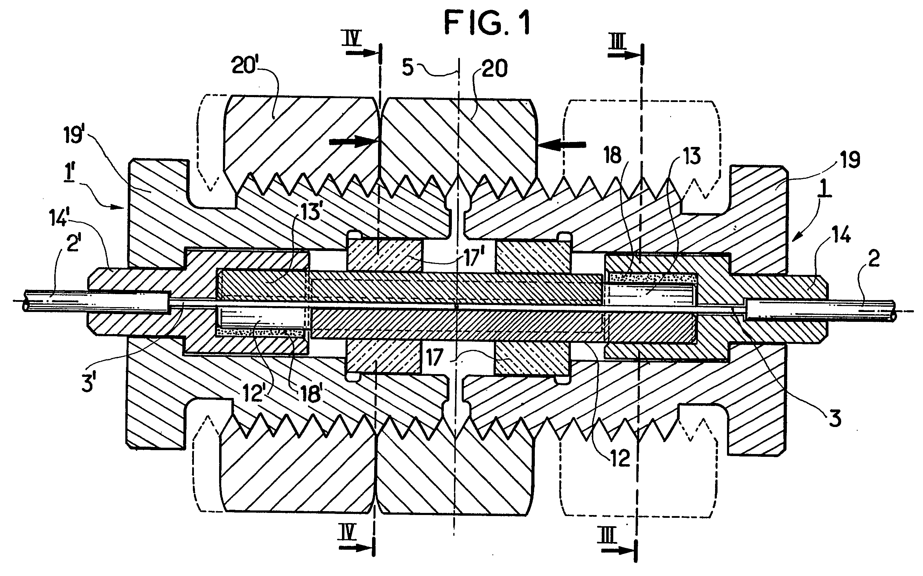

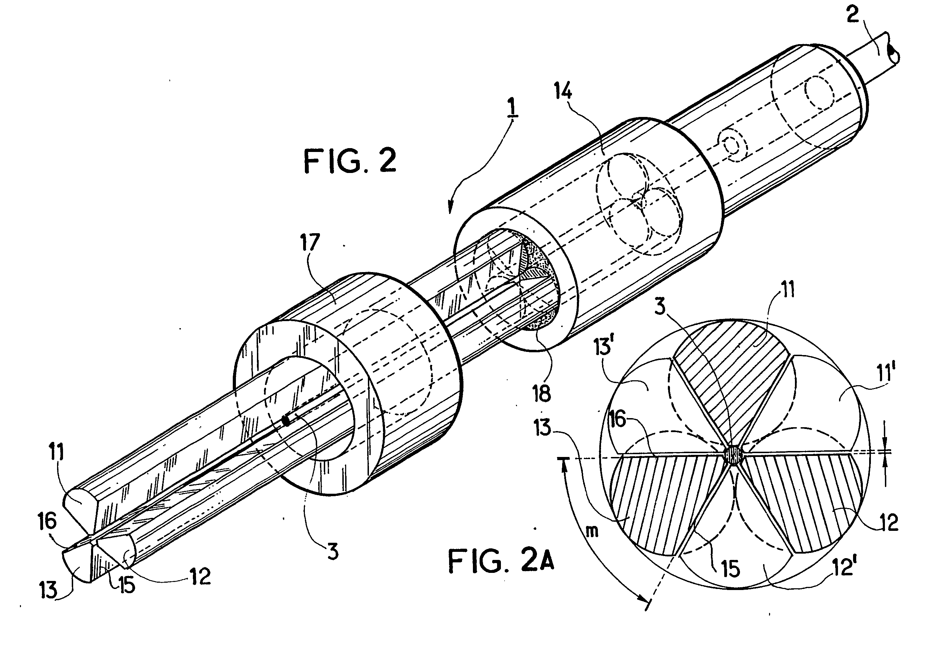

En regard des figures 1 et 2, on voit que le connecteur optique selon l'invention est formé de deux demi-connecteurs 1 et 1' emboitables partiellement l'un dans l'autre et ici identiques l'un à l'autre. Ce connecteur est destiné à assurer la connexion de deux fibres 3 et 3'. Les deux fibres 3 et 3' sont gainées, seules les portions terminales de ces deux fibres à connecter sont dénudées, les gaines respectives des fibres étant désignées par les références 2 et 2'.

Chacun de ces deux demi-connecteurs comporte trois tiges 11, 12 et 13 ou 11', 12' et 13', ces trois tiges sont cylindriques et maintenues dans une bague de maintien 14 ou 14' et définissent avec leur bague de maintien sur la longueur de celle-ci la moitié arrière de ce demi-connecteur; ces trois tiges sont usinées pour présenter chacune deux méplats tels que les méplats 15 et 16 de la tige 13 et entourées alors par une autre bague (ou plusieurs) 17 ou 17' dite bague de positionnement et définissent sur leur longueur usinée avec leur bague de positionnement la moitié avant de ce demi-connecteur.

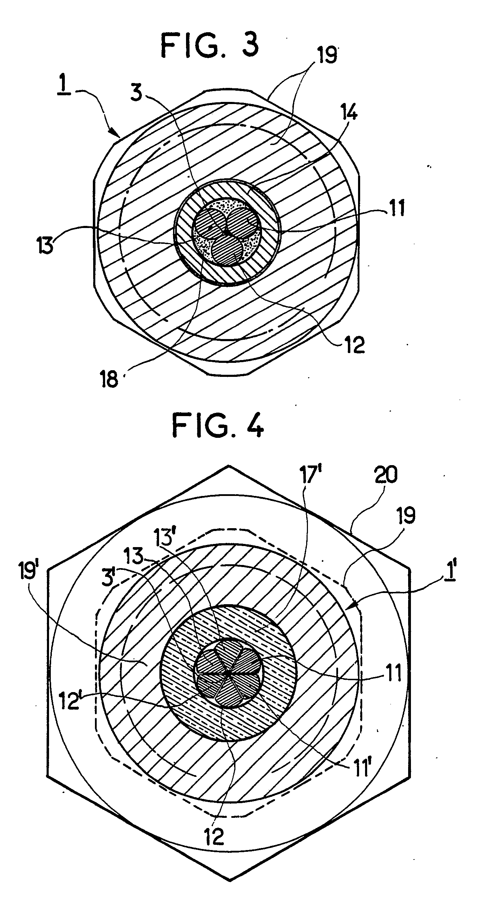

Ainsi que visible également dans la figure 3, dans le moitié arrière de chaque demi-connecteur, les trois tiges cylindriques sont maintenues serrées les unes contre les autres en étant sensiblement tangentes deux à deux par leur bague de maintien 14 ou 14' dans laquelle elles sont fixées, par exemple au moyen d'une résine repérée en 18 ou 18'. Ces trois tiges cylindriques, ainsi maintenues, délimitent entre elles un canal central dans lequel la fibre 3 ou 3' qui y est insérée est en contact avec les trois tiges cylindriques, le long d'une zone de contact selon une génératrice pour chacune d'elles. Ces tiges cylindriques définissent des premiers moyens de positionnement de la fibre 3 ou 3' dans chacun des demi-connecteurs 1 et 1'.

Ce canal central délimité par les trois tiges prolonge un canal de guidage de diamètre voisin de celui de la fibre gainée que forme la bague de maintien 14 ou 14' à l'extrémité du demiconnecteur concerné sur cette moitié arrière.

Ainsi que visible également dans les figures 2A et 4, dans la moitié avant de chaque demi-connecteur, les trois tiges 11, 12 et 13 ou 11', 12' et 13' précédemment cylindriques, sont usinées en présentant les deux méplats tels que 15 et 16 respectivement de part et d'autre du plan axial passant par la zone de contact avec la fibre pour chacune des tiges. Ces deux méplats sont ici sensiblement symétriques par rapport à ce plan axial, ils présentent entre eux un angle m sensiblement de 60°. Ces trois tiges ainsi rectifiées définissent alors un ensemble emboitable dans l'ensemble correspondant défini par les tiges rectifiées sensiblement identiques de l'autre demi-connecteur. Pour chaque demi-connecteur, la bague de positionnement 17 ou 17' est montée sur l'ensemble des trois tiges rectifiées, au delà de la portion médiane de cet ensemble, c'est-à-dire du côté de la bague de maintien 14 ou 14'; dans chacune de ces bagues de positionnement 17 ou 17' les portions des tiges de la périphérie de l'ensemble formé sont chacune tangentes à la paroi interne de la bague de positionnement et sont celles conservées des tiges initialement cylindriques, et les portions des tiges de la partie centrale de l'ensemble formé seront chacune également tangentes à la fibre 3 ou 3' insérée et sont les zones de contact conservées des tiges initialement cylindriques.

Dans chacun de ces deux demi-connecteurs, la fibre 3 ou 3' qu'il reçoit est insérée à travers la bague de maintien dans le canal central des tiges cylindriques et entre ces mêmes tiges rectifiées, son extrémité étant positionée sensiblement à mi-longueur de la moitié avant du demi-connecteur. Ainsi les deux demi-connecteurs étant emboités l'un dans l'autre, par engagement des tiges rectifiées de la moitié avant de l'un entre les tiges rectifiées de la moitié avant de l'autre, les extrémités des tiges se trouvent sensiblement en contact et rigoureusement face à face.

En regard de ce mode de connexion entre les deux fibres, on notera que dans chaque demi-connecteur les trois tiges rectifiées entourées de leur propre bague de positionnement assurent un prépositionnement de la fibre qu'il reçoit, pour l'alignement axial ultérieur de cette fibre avec l'autre fibre. Lorsque les deux demi-connecteurs sont emboités l'un dans l'autre, les deux bagues de positionnement 17 et 17' alors disposées de part et d'autre du plan de jonction entre les fibres, schématisé par la ligne en pointillés 5 dans la figure 1, mais proches de ce plan, entourent chacune les tiges rectifiées des deux ensembles emboités et assurent chacune, par les pressions radiales qu'elles exercent identiquement sur les six tiges, l'alignement axial final extrêmement précis de ces deux fibres. Cet alignement axial précis est directement obtenu par l'effet des bagues 17 et 17' sur ces six tiges imbriquées, il complète le pré-positionnement axial de chaque fibre dans son demi-connecteur et compense un jeu qui sera laissé entre tiges des ensembles emboités pour faciliter cet emboitement.

Bien entendu, le diamètre interne de chacune des bagues de positionnement 17 et 17' sera défini avec précision, en fonction du diamètre des tiges initialement cylindriques, lui-même défini en fonction du diamètre des fibres. Avantageusement ces bagues seront, dans ce but, en pierre synthétique telle que du rubis, les tiges transmettant les pressions radiales pouvant être en acier ou en verre.

Enfin, le connecteur selon l'invention est équipé de moyens mécaniques de maintien de l'assemblage de ses deux demi-connecteurs. Ainsi qu'illustré dans la figure 1 notamment, ces moyens de maintien de l'assemblage constituent le corps extérieur du connecteur et équipent de manière avantageuse identiquement les deux demi-connecteurs. Ces moyens d'assemblage comportent, pour chacun des deux demi-connecteurs non emboités, un fourreau 19 ou 19' partiellement fileté et un écrou 20 ou 20' associé. Le fourreau 19 est monté sur les bagues de maintien 14 et de positionnement 17, il recouvrent au moins partiellement la bague de maintien mais déborde au-delà de la bague de positionnement sensiblement jusqu'à mi-longueur de l'ensemble des trois tiges rectifiées, c'est-à-dire sensiblement jusqu'au plan de jonction 5. Ce fourreau présente intérieurement des épaulements venant en butée sur un épaulement correspondant présenté par la surface extérieure de la bague de maintien 14 et en butée contre le bord de la bague de positionnement 17, respectivement. Il peut être fixe sur au moins l'une de ces deux bagues, par exemple par collage à l'aide d'une résine de leurs surfaces. Ce fourreau 19 est fileté sur une partie de sa longueur, du côté des tiges rectifiées et porte l'écrou 20, tandis qu'il présente un épaulement extérieur formant butée pour cet écrou 20. Le fourreau 19' est monté identiquement au fourreau 19 sur les bagues 14' et 17' et porte l'écrou 20'. Le maintien assemblé des deux demi-connecteurs est alors assuré par vissage de l'écrou de l'un des deux fourreaux, ici l'écrou 20 sur le filetage de l'autre fourreau, ici 19', cet écrou 20 mordant alors simultanément sur les filetages des fourreaux de l'un et l'autre des deux demi-connecteurs tandis que le second écrou 20' joue le rôle de contre-écrou.

Bien entendu les moyens d'assemblage peuvent être de type différent, ils peuvent, par exemple être constitués par deux capuchons emboitables l'un dans l'autre avec verrouillage par bayonnette.

Dans la description ci-avant, on a indiqué que chaque bague de positionnement était en butée sur un épaulement interne du fourreau et pouvait être fixé sur sa paroi interne. Il peut en être ainsi sur tout autre moyen d'assemblage choisi qui forme le corps extérieur du connecteur, ou en variante chacune des bagues de positionnement pourra être fixée, à l'aide d'une résine sur les trois tiges rectifiées appartenant à ce demi-connecteur.

Ainsi que mentionné ce connecteur permet une connexion entre deux fibres avec d'excellentes conditions de centrage des fibres apportant un affaiblissement à la transmission extrémement réduit même en l'absence de liquide d'adaptation, un tel liquide, tel que le polyisobutylène pouvant aisément être, en outre, utilisé pour venir mouiller les faces frontales des fibres à connecter en vue d'améliorer les performances du connecteur.

On notera, en outre, que ce connecteur conduit à une connexion simple à réaliser, n'exigeant qu'une faible rotation relative de 60° entre lsf deux demi-connecteurs, cette rotation ne conduisant qu'à une faible torsion sans incidence transmise à l'une ou l'autre des fibres. Enfin, le connecteur réalisé est d'encombrement réduit en longueur.

**Revendications**

1. Connecteur optique monofibre formé de deux demi-connecteurs (1, 1') recevant respectivement les portions terminales de deux fibres (3, 3') à connecter et comportant des moyens d'assemblage (19, 19', 20, 20') des deux demi-connecteurs, chaque demi-connecteur comportant trois tiges (11, 12, 13; 11', 12', 13') maintenues côté à côté de manière à délimiter entre elles un canal central dans lequel est insérée la portion terminale de la fibre, ces trois tiges définissant, pour l'un et l'autre des deux demi-connecteurs, deux ensembles emboîtables l'un dans l'autre dans chacun desquels l'extrémité de la fibre (3, 3') est postionnée sensiblement à mi-longueur, ces trois tiges présentant, sensiblement sur la moitié avant de chacun des deux demi-connecteurs (1, 1'), deux méplats (15, 16) usinés respectivement de part et d'autre de la zone de contact de chacune d'elles avec la fibre, chaque demi-connecteur comportant également au moins une bague rigide de positionnement (17, 17') entourant les trois tiges, caractérisé en ce que dans la partie non-usinée les trois tiges sont cylindriques à section droite circulaire, en ce que dans la moitié avant de chacun de deux demi-connecteurs les zones de contact des tiges avec la fibre sont des portions conservées de la surface cylindrique desdites trois tiges, et en ce que chaque bague rigide entoure également les trois tiges de l'autre demi-connecteur, ces deux bagues assurant, par pression radiale sur lesdits ensembles emboîtés, le positionnement final des portions tecminales de l'une et l'autre des deux fibres (3, 3').

2. Connecteur selon la revendication 1, caractérisé par le fait que lesdits méplats (15, 16) sur chaque tige sont sensiblement symétriques par rapport au plan longitudinal médian de la tige, passant par sa zone de contact avec la fibre, et leur inclinaison par rapport à ce plan pour chaque tige se répète sensiblement d'une tige à l'autre dans l'un et l'autre des deux demi-connecteurs dont au moins les moitiés avant sont pratiquement identiques.

3. Connecteur selon l'une des revendications 1 et 2, caractérisé en ce que ladite bague de positionnement (17, 17') est fixée sur lesdites tiges (11—13; 11'—13'), sur la moitié avant d'un demi-connecteur (1, 1').

4. Connecteur selon l'une des revendications 1 et 2, caractérisé en ce que ladite bague de positionement (17, 17') est fixée sur lesdites moyens d'assemblage (19, 20; 19', 20') équipant l'un et l'autre des deux demi-connecteurs (1, 1') et constituant le corps extérieure du connecteur.

**Patentansprüche**

1. Verbinder für optische Monofasern, bestehend aus zwei Halbverbindern (1, 1'), die jeweils die Endabschnitte zweier zu verbindender Fasern (3, 3') aufnehmen und Mittel (19, 19', 20, 20') zur Vereinigung der beiden Halbverbinder aufweisen, wobei jede Verbinderhälfte drei Seite an Seite gehaltene Stäbe (11, 12, 13; 11', 12', 13') aufweist, derart, daß zwischen ihnen ein zentraler Kanal begrenzt wird, in welchem der Endabschnitt der Faser eingefügt ist, wobei die drei Stäbe für die eine oder für die andere der Halbverbinder zwei ineinander verschachtelbare Gruppen bilden und in jeder derselben das Ende der Faser im wesentlichen über die halbe Länge verläuft, wobei die drei Stäbe im wesentlichen über die vordere Hälfte jeder der zwei Halbverbinder (1, 1') zwei Abflachungen (15, 16) besitzen, die jeweils zu beiden Seiten der Kontaktzone der Stäbe mit der Faser angearbeitet sind, und wobei jeder Halbverbinder weiter mindestens einen steifen, die drei Stäbe umgebenden Positionierungsring (17, 17') aufweist, dadurch gekennzeichnet, daß die drei Stäbe im nichtbearbeiteten Abschnitt zylindrisch mit kreisförmigem Querschnitt ausgebildet sind, daß in der vorderen Hälfte jeder der beiden Halbverbinder die Kontaktzonen der Stäbe mit der Faser aus den verbliebenen Abschnitten der zylindrischen Oberfläche der drei Stäbe bestehen und daß jeder steife Ring ebenfalls die drei Stäbe des anderen Halbverbinders umschließt, wobei die beiden Ringe durch radialen Anpreßdruck auf die verschachtelten Gruppen die endgültige Positionierung der Endabschnitt der einen und der anderen der beiden Fasern (3, 3') bewirken.

2. Verbinder nach Anspruch 1, dadurch gekennzeichnet, daß die Abflachungen (15, 16) an jedem Stab im wesentlichen symmetrisch zur Mittelängsebene des Stabes liegen, die durch die Kontaktzone mit der Faser verläuft, und daß sich die Neigung der Abflachungen in Bezug auf diese Ebene für jeden Stab im wesentlichen von einem Stab zum anderen in dem einen und dem anderen der beiden Halbverbinder wiederholt, wobei mindestens deren vordere Hälften praktisch identisch sind.

3. Verbinder nach Anspruch 1 oder 2, dadurch gekennzeichnet, daß der Positionierungsring (17, 17') an den Stäben (11—13; 11'—13') im Bereich der vorderen Hälfte eines Halbverbinders (1, 1') fixiert ist.

4. Verbinder nach Anspruch 1 oder 2, dadurch gekennzeichnet, daß der Positionierungsring (17, 17') an den Vereinigungsmitteln (19, 20; 19', 20') fixiert ist, mit denen der eine und der andere der beiden Halbverbinder (1, 1') versehen ist und die den Außenkörper des Verbinders bilden.

**Claims**

1. An optical monofiber connector consisting of two half-connectors (1, 1') adapted to receive respective end portions of two fibers (3, 3') to connect, and comprising means (19, 19', 20, 20') for assembling the two half-connectors, each half-connector comprising three rods (11, 12, 13; 11', 12', 13') held side by side so as to define between them a central channel into which said fiber end portion is inserted, said three rods defining for one and the other half-connector two groups, which are adapted to be reciprocally nested into one another and in which the end of the fiber (3, 3') is positioned substantially midway, the three rods having two flats (15, 16) on the front half of each of its two half-connectors (1, 1'), these flats being machined respectively on each side of the contact area of the rods with the fiber, each half-connector further comprising at least one rigid positioning ring (17, 17') surrounding said three rods, characterized in that the rods are cylindrical in shape and circular in cross-section along the non-machined portion, that in the front half of each of the two half-connectors the contact areas of the rods with the fibers are portions left of the cylindrical surface of said rods, and that each rigid ring also surrounds the three rods of the other half-connector, said to rings being adapted to ensure the final positioning of the end portions of both fibers (3, 3') by way of radial pressure exerted upon said nested groups.

2. A connector according to claim 1, characterized in that said flats (15, 16) on each rod are substantially symmetrical relative to the longitudinal median plane of the rod passing through its area of contact with the fiber, their inclination relative to this plane being substantially the same for each rod and in each of said half-connectors, at least said front halves of which are substantially identical.

3. A connector according to claim 1 or 2, characterized in that the positioning ring (17, 17') is attached to said rods (11—13; 11'—13') within the front half of each half-connector (1, 1').

4. A connector according to claim 1 or 2, characterized in that said positioning ring (17, 17') is attached to said assembly means (19, 20; 19', 20') fitting the one and the other of both half-connectors (1, 1') which constitute the outer body of the connector.

FIG. 1

EP 0 068 423 B1

FIG. 2

FIG. 2A

# FIG. 3

# FIG. 4